# EUROPÄISCHE PATENTSCHRIFT

(11) **EP 3 551 476 B1**
(45) Veröffentlichungstag und Bekanntmachung des Hinweises auf die Patenterteilung: **16.09.2020**
(21) Anmeldenummer: 17783500.6
(22) Anmeldetag: 12.10.2017
(51) Int. Cl.: B60C 11/12, B60C 11/03

(54) **FAHRZEUGLUFTREIFEN**
VEHICLE TIRES
PNEUMATIQUE DE VÉHICULE

(30) Priorität: 07.12.2016 DE 102016224366
(43) Veröffentlichungstag der Anmeldung: 16.10.2019
(73) Patentinhaber: Continental Reifen Deutschland GmbH, 30165 Hannover (DE)
(72) Erfinder: KRINGS, Stefan, 31547 Rehburg-Loccum (DE); BRANDAU, Christian, 31542 Bad Nenndorf (DE); SENG, Matthias, 30453 Hannover (DE)
(74) Vertreter: Finger, Karsten
(86) Internationale Anmeldenummer: PCT/EP2017/076040
(87) Internationale Veröffentlichungsnummer: WO 2018/103924

(56) Entgegenhaltungen:
- EP-A1- 2 230 103
- EP-A2- 0 841 199
- DE-A1-102010 060 945
- JP-A- 2001 199 206
- JP-A- 2002 029 221
- JP-A- 2013 244 907

## Beschreibung

Die Erfindung betrifft einen Fahrzeugluftreifen mit einem Laufstreifen mit zumindest zwei in Umfangsrichtung umlaufenden Profilblockreihen mit in axialer Richtung paarweise nebeneinanderliegenden Profilblöcken, welche durch Querrillen voneinander getrennt sind, wobei die nebeneinanderliegenden Profilblöcke jeweils durch eine im Querschnitt im Wesentlichen U-Förmige Umfangsnut mit einem Nutgrund und einem vom Nutgrund ausgehenden in radialer Richtung verlaufenden Einschnitt voneinander getrennt sind, wobei die Umfangsnuten und die Einschnitte in Draufsicht gerade sowie zur Umfangsrichtung unter einem Winkel von bis zu 30° verlaufen.

Ein derartiger Fahrzeugluftreifen, welcher für den ganzjährigen Einsatz geeignet sein soll, ist beispielsweise aus der JP 2001 199206 A bekannt. Im mittleren Laufstreifenbereich dieses Reifens verlaufen vier Profilblockreihen, wobei jeweils zwei der Profilblockreihen in axialer Richtung paarweise nebeneinanderliegende Profilblöcke aufweisen. In Umfangsrichtung aufeinanderfolgende paarweise nebeneinanderliegende Profilblöcke sind durch durchgehende in Draufsicht zick-zack-förmige Querrillen voneinander getrennt. Die paarweise nebeneinanderliegenden Profilblöcke sind durch Umfangsnuten und Einschnitte voneinander getrennt, wobei die Einschnitte bis auf die Profiltiefe reichen. Die Umfangsnuten weisen eine Tiefe auf, die etwa 50% der Profiltiefe entspricht.

Aus der EP 2 230 103 A1 ist ein Fahrzeugluftreifen mit einem Laufstreifen mit zwei Profilblockreihen mit in axialer Richtung paarweise nebeneinanderliegenden Profilblöcken, welche durch Querrillen voneinander getrennt sind, bekannt. Die in axialer Richtung paarweise nebeneinanderliegenden Profilblöcke sind durch Umfangsnuten voneinander getrennt, von deren Nutgrund ein Einschnitt ausgeht. Die Einschnitte weisen einen entlang der einen Nutflanke verlaufenden, ersten Erstreckungsbereich, einen entlang der anderen Nutflanke verlaufenden, zweiten Erstreckungsbereich und einen zwischen diesen Erstreckungsbereichen sowie quer zur Erstreckungsrichtung der Umfangsnut verlaufenden Übergangsbereich auf. Diese Maßnahmen sollen - bedingt durch Abstützungseffekte - beim Auftreten hoher Querkräfte einen vergleichsweise geringen Laufstreifenabrieb ermöglichen.

Die EP 0 841 199 A2 offenbart einen Fahrzeugluftreifen mit einem Laufstreifen mit in axialer Richtung paarweise nebeneinanderliegenden Profilblöcken, welche durch eine unterbrechungsfrei umlaufende Umfangsnut voneinander getrennt sind. Vom Nutgrund der Umfangsnut geht ein umlaufender Einschnitt aus.

Seichtere Umfangsnuten mit von ihrem Nutgrund ausgehenden Einschnitten entkoppeln die paarweise nebeneinanderliegenden Profilblöcke derart, dass ein gleichmäßiger Laufstreifenabriebes unterstützt wird. Die Umfangsnuten des aus der JP 2001 199206 A bekannten Laufstreifens weisen nun eine relativ große Tiefe auf. Die relativ tiefen Umfangsnuten begrenzen Blockkanten, welche in der Funktion von "Fräskanten" einen gewissen Griff auf schneebedeckten Fahrbahnen sicherstellen, eine gute Performance auf schneebedeckten Fahrbahnen lässt sich mit diesem für den Ganzjahreseinsatz vorgesehenen Reifen jedoch nicht erreichen.

Der Erfindung liegt daher die Aufgabe zugrunde, bei einem Fahrzeugluftreifen der eingangs genannten Art die Performance auf schneebedecktem Untergrund zu verbessern.

Die gestellte Aufgabe wird erfindungsgemäß dadurch gelöst, dass die Umfangsnuten eine Tiefe von 1,5 mm bis 2,5 mm sowie an der Laufstreifenperipherie eine Breite, welche das 2,0-Fache bis 3,0-Fache der Tiefe beträgt, aufweisen, wobei die Einschnitte in einem in radialer Richtung ermittelten Abstand von bis zu 2,0 mm über dem Niveau der Profiltiefe enden und eine Breite von 0,2 mm bis 0,7 mm aufweisen.

Gemäß der Erfindung ausgeführte Umfangsnuten, die gemeinsam mit dem von ihrem Nutgrund ausgehenden Einschnitten die paarweise nebeneinanderliegenden Profilblöcke voneinander trennen, sind derart dimensioniert, dass sie einen guten Schneegriff sicherstellen. Die relativ seichten Umfangsnuten füllen sich beim Fahren auf schneebedeckten Fahrbahnen besonders schnell und zuverlässig mit Schnee und gewährleisten die für den Schneegriff wichtige Schnee-Schnee-Reibung zwischen dem Laufstreifen und der schneebedeckten Fahrbahn. Besonders vorteilhaft ist die Schnee-Schnee-Reibung im Bereich dieser Umfangsnuten für eine gute Übertragung von Seitenkräften auf die Fahrbahn bei Kurvenfahrt.

Gemäß einer bevorzugten Ausführungsform der Erfindung beträgt die Breite der Umfangsnuten an der Laufstreifenperipherie maximal das 2,5-Fache ihrer Tiefe. Nuten mit einem derartigen Verhältnis von Breite zu Tiefe können sich besonders gut und schnell mit Schnee füllen und die erwünschte Schnee-Schnee-Reibung sicherstellen.

Der Winkel, unter welchem die Umfangsnuten und die Einschnitte in Draufsicht zur Umfangsrichtung verlaufen, beträgt gemäß einer bevorzugten Ausführung der Erfindung bis zu 15°, insbesondere 0°. Ein derartiger Verlauf der Umfangsnuten ist für eine gute Seitenführung auf schneebedeckten Fahrbahnen besonders vorteilhaft.

Schnee- und Eisgriff von erfindungsgemäß ausgeführten Fahrzeugluftreifen werden ferner, wie an sich bekannt, auch durch eine Vielzahl von schmalen, insbesondere 0,3 mm bis 0,8 mm breiten Einschnitten in den Profilblöcken vorteilhaft beeinflusst. Bei einer bevorzugten Ausführungsform der Erfindung sind daher auch die paarweise nebeneinander liegenden Profilblöcke jeweils mit einer Vielzahl von zur Querrichtung des Laufstreifens unter einem Winkel von bis zu 45° verlaufenden Einschnitten versehen. Solche Einschnitte verlaufen oft in Draufsicht wellenförmig. Bei einer Ausführungsform der Erfindung sind in den Profilblöcken Einschnitte vorgesehen, welche mit insbesondere in Draufsicht gerade verlaufenden Endabschnitten bis zu den Umfangsnuten reichen, daher in diese einmünden, wobei bei einer alternativen, für Schnee- und Eisgriff besonders vorteilhaften Ausführungsform, diese Endabschnitte bis zu den vom Nutgrund der Umfangsnuten ausgehenden Einschnitten reichen.

Die Profilblockreihen mit den in axialer Richtung paarweise nebeneinanderliegenden Profilblöcken befindet sich bevorzugt im mittleren Bereich des Laufstreifens und weisen in axialer Richtung eine Breite von 20% bis 35% der Bodenaufstandsflächenbreite des Laufstreifens auf. Derart positionierte, nebeneinanderliegende Profilblockreihen sorgen besonders gut für die Übertragung von Seitenkräften auf schneebedeckten Fahrbahnen bei Kurvenfahrt.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf einen Umfangsabschnitt von zwei nebeneinanderliegende Profilblockreihen eines Laufstreifens eines Fahrzeugluftreifens mit einer Ausführungsvariante der Erfindung und
Fig. 2 einen Schnitt entlang der Linie II-II der Fig. 1.

Erfindungsgemäß ausgeführte Fahrzeugluftreifen sind Winterreifen oder Ganzjahresreifen in Radialbauart für Personenkraftwagen, Vans oder Light-Trucks.

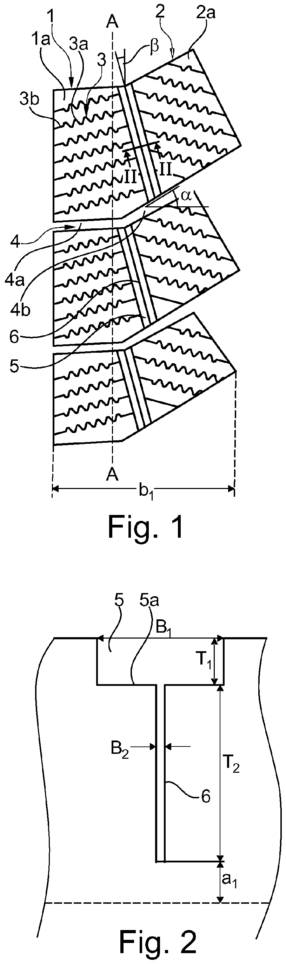

In Fig. 1 sind von zwei im mittleren Laufstreifenbereich in Umfangsrichtung umlaufenden Profilblockreihen 1, 2 jeweils drei Profilblöcke 1a, 2a gezeigt, wobei die Profilblöcke 1a, 2a der beiden Profilblockreihen 1, 2 in axialer Richtung paarweise nebeneinanderliegen. Die Äquatorialebene des Fahrzeugluftreifens ist in Fig. 1 durch eine Linie A-A angedeutet und verläuft durch die Profilblockreihe 1. Die Profilblockreihen 1 und 2 nehmen in axialer Richtung gemeinsam eine Breite b₁ von 20% bis 35% der größten Bodenaufstandsflächenbreite des Laufstreifens ein, wobei die Bodenaufstandsfläche dem statisch ermittelten Footprint gemäß E.T.R.T.O.-Standards (Last bei 70% der Tragfähigkeit bei einem Innendruck von 2,5 bar, Innendruck 85% von 2,9 bar) entspricht.

Sämtliche Profilblöcke 1a, 2a sind mit Einschnitten 3 versehen, welche sich in jeder Profilblockreihe 1, 2 parallel zueinander sowie in Draufsicht unter einem um 15° bis 25° von der axialen Richtung abweichenden Winkel erstrecken. Die Einschnitte 3 weisen jeweils einen in Draufsicht wellenförmigen mittleren Abschnitt 3a und zwei gerade verlaufende Endabschnitte 3b auf.

In Umfangsrichtung aufeinanderfolgende paarweise nebeneinanderliegende Profilblöcke 1a, 2a sind durch über beide Profilblockreihen 1, 2 durchgehende Querrillen 4 voneinander getrennt, wobei die Querrillen 4 bei der gezeigten Ausführungsvariante in Draufsicht jeweils einen geknickten Verlauf und daher einen im Wesentlichen in axialer Richtung verlaufenden Abschnitt 4a und einen zur axialen Richtung geneigten Abschnitt 4b, welcher unter einem um bis zu 30° von der axialen Richtung abweichenden Winkel α verläuft, aufweisen.

Die paarweise nebeneinanderliegenden Profilblöcke 1a, 2a sind voneinander jeweils durch eine seichte Umfangsnut 5 mit einem Nutgrund 5a und einen von der Mitte des Nutgrundes 5a ausgehenden Einschnitt 6 getrennt (Fig. 2), wobei die Umfangsnut 5 und der Einschnitt 6 mit ihren Enden in je eine der Querrillen 4 münden. Die Umfangsnuten 5 und die Einschnitte 6 verlaufen in Draufsicht gerade sowie unter einem Winkel β von 0° bis zu 30°, insbesondere von bis zu 15°, und bevorzugt von 0°, zur Umfangsrichtung. Beim gezeigten Ausführungsbeispiel verlaufen die Umfangsnuten 5 und die Einschnitte 6 derart, dass sie mit ihrem einen Ende beim Knick der einen Querrille 4 und mit ihrem anderen Ende in den geneigten Abschnitt 4a der anderen Querrille 4 einmünden.

Fig. 2 zeigt einen Querschnitt durch eine Umfangsnut 5, wobei das Niveau der für den betreffenden Laufstreifen vorgesehenen Profiltiefe, welche üblicherweise 6,5 mm bis 9,0 mm beträgt, gestrichelt eingezeichnet ist. Die Umfangsnut 5 ist im Querschnitt betrachtet im Wesentlichen flach U-förmig ausgeführt, weist in radialer Richtung eine Tiefe T₁ von 1,5 mm bis 2,5 mm sowie an der Laufstreifenperipherie eine Breite B₁ auf, welche das 2,0-Fache bis 3,0-Fache, insbesondere bis zum 2,5-Fachen, der Tiefe T₁ beträgt. Die vom Nutgrund 5a ausgehenden Einschnitte 6 verlaufen im Querschnitt betrachtet in radialer Richtung, wobei sie in einem in radialer Richtung ermittelten Abstand a₁ von bis zu 2,0 mm über dem Niveau der Profiltiefe enden und eine Breite B₂ von 0,2 mm bis 0,7 mm aufweisen.

Die in den Profilblöcken 1a, 2a ausgebildeten Einschnitte 3 können - wie in Fig. 1 gezeigt -mit ihren gerade verlaufende Endabschnitten 3b bis zu den Einschnitten 6 reichen und daher in die Einschnitte 6 münden. Alternativ können die Einschnitte 3 mit ihren gerade verlaufenden Endabschnitten 3b bis zu den Umfangsnuten 5 verlaufen und an diesen - in einem entsprechenden Abstand vor den Einschnitten 6 - enden.

Die Erfindung ist nicht auf das beschriebene Ausführungsbeispiel beschränkt. Insbesondere können die in den Profilblöcken 1a, 2a vorgesehenen Einschnitte in Draufsicht gerade oder zumindest abschnittsweise zickzack- oder sägezahnförmig verlaufen. Ferner können sich die Einschnitte in axialer Richtung oder unter einem um bis zu 45° von der axialen Richtung abweichenden Winkel erstrecken. Profilblockreihen mit paarweisen nebeneinanderliegenden Profilblöcken können auch in anderen Bereichen des Laufstreifens vorgesehen sein. Die Querrillen 4, welche in Umfangsrichtung aufeinanderfolgende und paarweise nebeneinanderliegende Profilblöcke 1a, 2a voneinander trennen, können in Draufsicht auch gerade oder mit mehreren Knickstellen versehen verlaufen. Die Profilblöcke 1a, 2a können eine in Draufsicht beliebige, insbesondere eine für Profilblöcke übliche, Gestalt aufweisen.

### Bezugsziffernliste

- 1, 2,: Profilblockreihe
- 1a, 2a: Profilblock
- 3: Einschnitt
- 3a: mittlerer Abschnitt
- 3b: Endabschnitt
- 4: Querrille
- 4a, 4b: Abschnitt
- 5: Umfangsnut
- 5a: Nutgrund
- 6: Einschnitt
- A-A: Linie
- B₁, B₂: Breite
- b₁: Breite
- T₁, T₂: Tiefe
- A-A: Linie
- α, β: Winkel

## Patentansprüche

1. Fahrzeugluftreifen mit einem Laufstreifen mit zumindest zwei in Umfangsrichtung umlaufenden Profilblockreihen (1, 2) mit in axialer Richtung paarweise nebeneinanderliegenden Profilblöcken (la, 2a), welche durch Querrillen (4) voneinander getrennt sind, wobei die nebeneinanderliegenden Profilblöcke (la, 2a) durch eine im Querschnitt im Wesentlichen U-Förmige Umfangsnut (5) mit einem Nutgrund (5a) und einem vom Nutgrund (5a) ausgehenden in radialer Richtung verlaufenden Einschnitt (6) voneinander getrennt sind, wobei die Umfangsnuten (5) und die Einschnitte (6) zur Umfangsrichtung unter einem Winkel (β) von bis zu 30° verlaufen, wobei die Umfangsnuten (5) eine Tiefe (T₁) von 1,5 mm bis 2,5 mm aufweisen und wobei die Einschnitte (6) in einem in radialer Richtung ermittelten Abstand (a1) von bis zu 2,0 mm über dem Niveau der Profiltiefe enden und eine Breite (B₂) von 0,2 mm bis 0,7 mm aufweisen, **dadurch gekennzeichnet,**
**dass** die Umfangsnuten (5) und die Einschnitte (6) in Draufsicht gerade verlaufen und die Umfangsnuten (5) an der Laufstreifenperipherie eine Breite (B₁) aufweisen, welche das 2,0-Fache bis 3,0-Fache ihrer Tiefe (T₁) beträgt.

2. Fahrzeugluftreifen nach Anspruch 1, **dadurch gekennzeichnet, dass** die Breite (B₁) der Umfangsnuten (5) an der Laufstreifenperipherie maximal das 2,5-Fache der Tiefe (T₁) der Umfangsnuten (5) beträgt.

3. Fahrzeugluftreifen nach Anspruch 1 oder 2, **dadurch gekennzeichnet, dass** der Winkel (β), unter welchem die Umfangsnuten (5) und die Einschnitte (6) in Draufsicht zur Umfangsrichtung verlaufen, bis zu 15°, insbesondere 0°, beträgt.

4. Fahrzeugluftreifen nach einem der Ansprüche 1 bis 3, **dadurch gekennzeichnet, dass** die paarweise nebeneinanderliegenden Profilblöcke (1a, 2a) jeweils mit einer Vielzahl von zur Querrichtung des Laufstreifens unter einem Winkel von bis zu 45° verlaufenden Einschnitten (3) versehen sind, welche mit insbesondere in Draufsicht gerade verlaufenden Endabschnitten (3b) bis zu den Umfangsnuten (5) reichen.

5. Fahrzeugluftreifen nach einem der Ansprüche 1 bis 4, **dadurch gekennzeichnet, dass** die Profilblöcke (1a, 2a) der zumindest zwei Profilblockreihen (1, 2) mit in axialer Richtung paarweise nebeneinanderliegenden Profilblöcken (1a, 2a) jeweils mit einer Vielzahl von zur Querrichtung des Laufstreifens unter einem Winkel von bis zu 45° verlaufenden Einschnitten (3) versehen sind, welche insbesondere mit in Draufsicht geraden Endabschnitten (3b) bis zu den vom Nutgrund (5a) der Umfangsnuten (5) ausgehenden Einschnitten (6) reichen.

6. Fahrzeugluftreifen nach einem der Ansprüche 1 bis 5, **dadurch gekennzeichnet, dass** die zwei Profilblockreihen (1, 2) mit den in axialer Richtung paarweise nebeneinanderliegenden Profilblöcken (1a, 2a) im mittleren Bereich des Laufstreifens verlaufen.

7. Fahrzeugluftreifen nach einem der Ansprüche 1 bis 6, **dadurch gekennzeichnet, dass** die zwei Profilblockreihen (1, 2) mit den in axialer Richtung paarweise nebeneinanderliegenden Profilblöcken (1a, 2a) in axialer Richtung eine Breite (b₁) von 20% bis 35% der Bodenaufstandsflächenbreite des Laufstreifens aufweisen.

## Claims

1. Vehicle tyre comprising a tread with at least two rows of tread bars (1, 2) running in the circumferential direction, with tread bars (1a, 2a) lying next to one another in pairs in the axial direction, which are separated from one another by transverse channels (4), wherein the tread bars (1a, 2a) lying next to one another are separated from one another by a cross-sectionally substantially U-shaped circumferential groove (5) with a groove base (5a) and a sipe (6) running from the groove base (5a) in the radial direction, wherein the circumferential grooves (5) and the sipes (6) run at an angle (β) to the circumferential direction of up to 30°, wherein the circumferential grooves (5) have a depth (T₁) of 1.5 mm to 2.5 mm and wherein the sipes (6) end at a distance (a₁), determined in the radial direction, of up to 2.0 mm above the level of the profile depth and have a width (B₂) of 0.2 mm to 0.7 mm,
**characterized**
**in that** the circumferential grooves (5) and the sipes (6) run straight in plan view and the circumferential grooves (5) have at the periphery of the tread a width (B₁) that is 2.0 times to 3.0 times their depth (T₁) .

2. Pneumatic vehicle tyre according to Claim 1, **characterized in that** the width (B₁) of the circumferential grooves (5) at the periphery of the tread is a maximum of 2.5 times the depth (T₁) of the circumferential grooves (5).

3. Pneumatic vehicle tyre according to Claim 1 or 2, **characterized in that** the angle (β) at which the circumferential grooves (5) and the sipes (6) run in relation to the circumferential direction in plan view is up to 15°, in particular 0°.

4. Pneumatic vehicle tyre according to one of Claims 1 to 3, **characterized in that** the tread bars (1a, 2a) lying next to one another in pairs are provided in each case with a multiplicity of sipes (3) that run at an angle to the transverse direction of the tread of up to 45° and reach up to the circumferential grooves (5) with in particular end portions (3b) which run straight in plan view.

5. Pneumatic vehicle tyre according to one of Claims 1 to 4, **characterized in that** the tread bars (1a, 2a) of the at least two rows of tread bars (1, 2), with tread bars (1a, 2a) lying next to one another in pairs in the axial direction, are provided in each case with a multiplicity of sipes (3) that run at an angle to the transverse direction of the tread of up to 45° and reach up to the sipes (6) extending from the groove base (5a) of the circumferential grooves (5) in particular with end portions (3b) which run straight in plan view.

6. Pneumatic vehicle tyre according to one of Claims 1 to 5, **characterized in that** the two rows of tread bars (1, 2), with the tread bars (1a, 2a) lying next to one another in pairs in the axial direction, run in the middle region of the tread.

7. Pneumatic vehicle tyre according to one of Claims 1 to 6, **characterized in that** the two rows of tread bars (1, 2), with the tread bars (1a, 2a) lying next to one another in pairs in the axial direction, have in the axial direction a width (b₁) of 20% to 35% of the width of the ground contact area of the tread.

## Revendications

1. Pneumatique de véhicule comprenant une bande de roulement avec au moins deux rangées de blocs profilés (1, 2) s'étendant dans la direction périphérique, avec des blocs profilés (1a, 2a) juxtaposés par paires dans la direction axiale, qui sont séparées les unes des autres par des gorges transversales (4), les blocs profilés juxtaposés (1a, 2a) étant séparés les uns des autres par une rainure périphérique (5) de section transversale essentiellement en forme de U, avec un fond de rainure (5a) et une entaille (6) s'étendant à partir du fond de rainure (5a) dans la direction radiale, les rainures périphériques (5) et les entailles (6) s'étendant par rapport à la direction périphérique suivant un angle (β) allant jusqu'à 30°, les rainures périphériques (5) présentant une profondeur (T₁) 1,5 mm à 2,5 mm et les entailles (6) se terminant à une distance (a1) déterminée dans la direction radiale allant jusqu'à 2,0 mm au-dessus du niveau de la profondeur de profilé et présentant une largeur (B₂) de 0,2 mm à 0,7 mm,
**caractérisé en ce que**
les rainures périphériques (5) et les entailles (6) s'étendent en ligne droite en vue de dessus et les rainures périphériques (5) présentent au niveau de la périphérie de la bande de roulement une largeur (B₁) qui vaut 2,0 fois à 3,0 fois leur profondeur (T₁).

2. Pneumatique de véhicule selon la revendication 1, **caractérisé en ce que** la largeur (B₁) des rainures périphériques (5) au niveau de la périphérie de la bande de roulement vaut au maximum 2,5 fois la profondeur (T₁) des rainures périphériques (5).

3. Pneumatique de véhicule selon la revendication 1 ou 2, **caractérisé en ce que** l'angle (β) suivant lequel les rainures périphériques (5) et les entailles (6) s'étendent en vue de dessus par rapport à la direction périphérique vaut jusqu'à 15°, en particulier vaut 0°.

4. Pneumatique de véhicule selon l'une quelconque des revendications 1 à 3, **caractérisé en ce que** les blocs profilés juxtaposés par paires (la, 2a) sont à chaque fois pourvus d'une pluralité d'entailles (3) s'étendant par rapport à la direction transversale de la bande de roulement suivant un angle allant jusqu'à 45°, lesquelles entailles s'étendent, avec des portions d'extrémité (3b) s'étendant en ligne droite notamment en vue de dessus, jusqu'aux rainures périphériques (5)

5. Pneumatique de véhicule selon l'une quelconque des revendications 1 à 4, **caractérisé en ce que** les blocs profilés (1a, 2a) des au moins deux rangées de blocs profilés (1, 2) sont pourvus de blocs profilés (1a, 2a) juxtaposés par paires dans la direction axiale à chaque fois avec une pluralité d'entailles (3) s'étendant par rapport à la direction transversale de la bande de roulement suivant un angle allant jusqu'à 45°, lesquelles entailles s'étendent notamment avec des portions d'extrémité (3b) droites en vue de dessus jusqu'aux entailles (6) partant du fond de rainure (5a) des rainures périphériques (5).

6. Pneumatique de véhicule selon l'une quelconque des revendications 1 à 5, **caractérisé en ce que** les deux rangées de blocs profilés (1, 2) s'étendent avec les blocs profilés (1a, 2a) juxtaposés par paires dans la direction axiale dans la région centrale de la bande de roulement.

7. Pneumatique de véhicule selon l'une quelconque des revendications 1 à 6, **caractérisé en ce que** les deux rangées de blocs profilés (1, 2) présentent avec les blocs profilés (1a, 2a) juxtaposés par paires dans la direction axiale une largeur (b₁) dans la direction axiale de 20 % à 35 % de la largeur de la surface d'appui au sol de la bande de roulement.
